# EUROPEAN PATENT APPLICATION

(11) **EP 0 618 565 A2**
(43) Date of publication of application: **05.10.1994**
(21) Application number: 94100506.8
(22) Date of filing: 14.01.1994
(51) Int. Cl.: G10L 5/06

(54) **Interactive dynamic grammar constraint in speech recognition**

(30) Priority: 02.04.1993 US 42373
(71) Applicant: International Business Machines Corporation, Armonk, N.Y. 10504 (US)
(72) Inventor: Corballis, Liam P., Smithsburg Maryland 21783 (US)
(74) Representative: Jost, Ottokarl, Dipl.-Ing.

(57) **Abstract**

An interactive dynamic constraint speech recognition method and system. The method employs a speech pattern database (27) which is used to compile an updated grammar graph (32, 35). The grammar graph is constrained to the available word choices based on inputs from an external system application. The grammar graph used within the recognition processor (47) is dynamically recompiled to reflect the currently available vocabulary.

## Description

### BACKGROUND OF THE INVENTION

### 1. Technical Field

The present invention relates generally to speech recognition techniques and in particular, to techniques for grammar constraints as a means of increasing speech recognition accuracy.

### 2. Background Art

Current speech recognition system accuracy is highly dependent upon the "perplexity" of the task, i.e., the number of possible word choices at any point in the speech string. These factors depend upon the total size of the active vocabulary (total choices) and the degree of "constraint" provided by the grammar/syntax. The more constrained the grammar, the fewer choices at each step of evaluating a sentence. Some applications require a very large vocabulary with a high degree of perplexity. For these applications, it is very difficult - if not impossible with current technology, to achieve extremely low error rates.

In classic speech recognition systems, the designer attempts to manually constrain the system, to reduce perplexity/branching. For example, in a radiology task, a user would be required to speak a series of words which are used by the system to eliminate whole portions of the grammar model, e.g.; Human, Female, Chest, Lung, Tumor, Cancer. The goal is to eliminate 75% of the possible choices after each word, such that only a very small portion of the grammar remains. At that point, the user may begin to speak full sentences. This manual constraint is necessary for two reasons. First, there is no a priori knowledge of what will be spoken in any instance in time, and second, grammar graphs must be compiled from descriptive files and installed upon the target machine - in other words, the grammar is static.

Although, such manual constraints might produce acceptable results for non-real-time applications, like radiology, they are not acceptable for real-time applications, such as, Air Traffic Control (ATC), in which a spoken sentence must be recognized at once, without preparatory remarks. In such applications, the only option is to build a fairly unconstrained grammar in which, perhaps, hundreds or thousands of words are possible at each point in a sentence, as opposed to a more optimal four word choices. Such a low level of constraint coupled with use in a real-time, stressed filled, noisy environment, results in unacceptable error rates and response times.

There are categories of applications, such as, air traffic control, in which aspects of the application can provide some level of a priori knowledge of the recognition system which can be used to constrain the recognition vocabulary. What is needed is a method to provide constraint to the system, such as using data from the speech recognizer's surrounding environment to dynamically constrain the active grammar at any instant in time. A method for dynamic constraint would result in a dramatic decrease in speech recognition error rate. A means is needed for extracting data from systems interfaced with the recognizer and using that data to compile grammar graphs, in real-time which contain only that vocabulary likely to be spoken within the next several minutes. This would include the expunging of vocabulary from the grammar graph once it has been determined that the grammar is no longer a candidate to be spoken.

### Summary of the Invention

It is an object of the invention to increase speech recognition accuracy by dynamically constraining the active grammar at any instant in time. This is accomplished by dynamically updating a grammar graph. The speech recognition process controller maintains a current listing of available grammar in the form of the grammar graph. The grammar graph is interactively updated based on the system environment in real-time.

The speech recognition system receives inputs as to the available vocabulary from an external application. The inputs are feed to a compiler which compiles a grammar graph database based on the available vocabulary and a speech pattern database. The grammar graph is used by a recognition processor to determine quickly and accurately the spoken words or phrases. Two grammar graphs can be used to allow updating in real-time.

### Brief Description of the Drawings

These and other objects, features and advantages of the invention will be more fully appreciated with reference to the accompanying Figures.
- Fig. 1: is a schematic of a typical speech recognition system known in the art.
- Fig. 2: illustrates the interactive dynamic grammar constraint speech recognition system of the present invention.
- Fig. 3: is an example of the syntax for constructing one type of Aircraft Identification called "General Aviation".
- Fig. 4: is an example of the various nodes of a grammar graph for all possible General Aviation aircraft identifications.
- Fig. 5: shows a "highly constrained" grammar graph for the specific general aviation aircraft identifications listed in Table 1.
- Fig. 6: is a pseudocode listing for implementation of the dynamic grammar constraint of the present invention.

### DESCRIPTION OF THE INVENTION

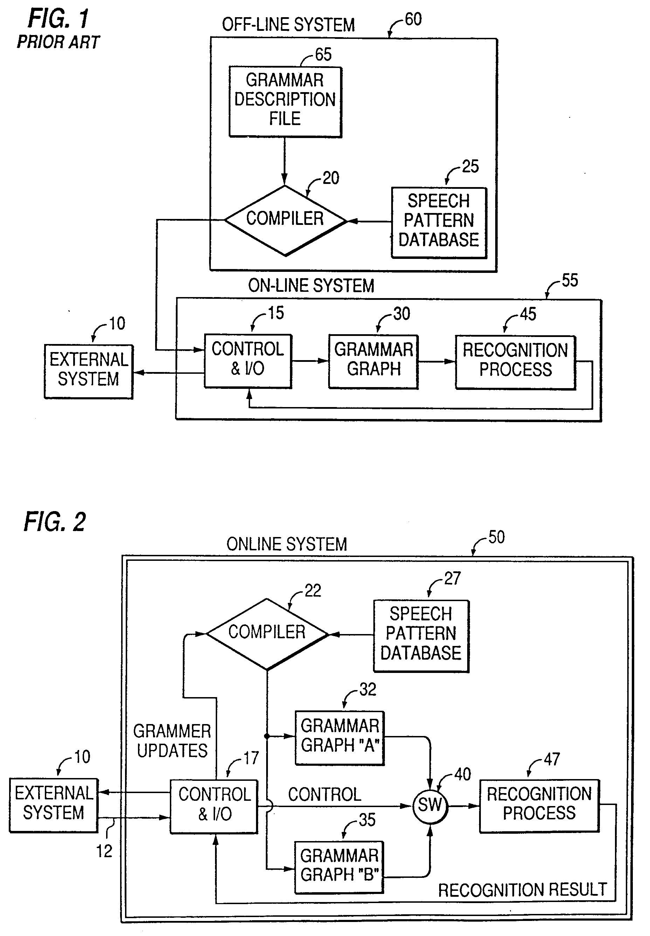

A typical speech recognition system known in the art is shown in Figure 1. It consists of three major subsections, an off-line processor 60, used for production of grammar graphs, an on-line system 55, used to perform the actual recognition, an external system 10, which is the application, e.g., radiology or air traffic control, which relies upon the speech recognition result. Under typical utilization, a static grammar description file is generated by a speech recognition specialist. This file describes a universal set of all possible speech inputs to be recognized. The file 65, is compiled off-line against a database 25, containing speech patterns of the words contained in the grammar file 65. The resulting file is then transferred either electronically or via diskette to the on-line system 55. The control and input/output module 15 loads this grammar graph into memory 30. The on-line system 55 is then ready to initialize and begin speech recognition processing 45. Recognition results are output via the control and I/O processor 15 to the application 10.

Shown in Figure 2, the previously described recognition system 55 has been augmented by an on-line interactive dynamic grammar constraint system 50. The invention entails special control and interface software located in the control and I/O processor 17, a bidirectional interface 12 and supporting software in the external system application 10, a real-time compiler 22, a second memory resident grammar graph 35 and memory mapping switch 40.

The interactive dynamic grammar constraint system 50 starts off with only the speech pattern database 27 being active. Speech pattern database 27 is contained in the on-line system 50 and starts out containing speech patterns for all possible words. This database is similar to the speech pattern database 25 in off-line system 60. The interactive constraint system 50 starts off with both its normal grammar graph "A" 32 and augmented grammar graph "B" 35 memories empty. The external application system 10 then sends the control I/O processor 17 a list of phrases or sentences which have been determined to be likely candidates to be spoken within the next interval of time. This list is forwarded to the real-time compiler 22 which selects only the applicable patterns from the database 27 and outputs a highly constrained grammar graph which is loaded into memory location A in grammar graph 32. This process takes less than one second. The control I/O processor 17 sets the memory allocation switch 40 such that the recognition process utilizes grammar graph A 32 in its speech recognition processing. The recognition results are output to the application 10 in a normal manner.

After some interval of time, the external application system 10 sends an update message to the control I/O processor 17. This message contains both additional sentences or phrases which are eligible for recognition as well as sentences or phrases which are no longer eligible for recognition. The control processor 17 then sums this data with that previously received. That is, the additions are added and the deletions are subtracted. What results is a new file containing only the sentences or phrases considered valid for the next interval of time. This data is sent to compiler 22. The compiler 22 draws any additional information necessary from the speech pattern database 27 and compiles a new grammar graph. The new grammar graph data is sent to location in the grammar graph memory "B" 35. The entire process takes place within one second. The control I/O processor 17 monitors the recognition processor 47 to insure that an active speech recognition process is not in progress. If not, the memory mapping switch is set such that the next recognition process started will use grammar graph "B" 35 instead of the previously used grammar graph "A" 32. If a recognition process is in progress, the processor 17 waits until it is finished before changing the state of the switch 40.

Through the use of this invention, the active recognition grammar can be dynamically "re-constrained" in between every recognition event, if necessary, to achieve continuous tuning of recognition grammar for maximum constraint and minimum errors. Grammar no longer being used can be expunged from the updated grammar graph.

An additional benefit of the invention is that the recognition grammar can optionally be compiled as a series of entire sentences, as if the sentence were a word itself, such that entire sentences might be evaluated against one another as discrete entities.

The invention has been implemented in an air traffic control application for enhancing tower control operations. By way of automation, data on each flight which is currently recorded on paper flight strips is now being placed in a computer database for display at a computer terminal. As the air traffic controller speaks to each aircraft, the speech recognition system must recognize the aircraft identification (aircraft ID) so that the application can retrieve data on this aircraft. This task must be accomplished under field conditions with no more that a 2% error rate. After studies were performed, it was determined that conventional techniques could not yield this error performance.

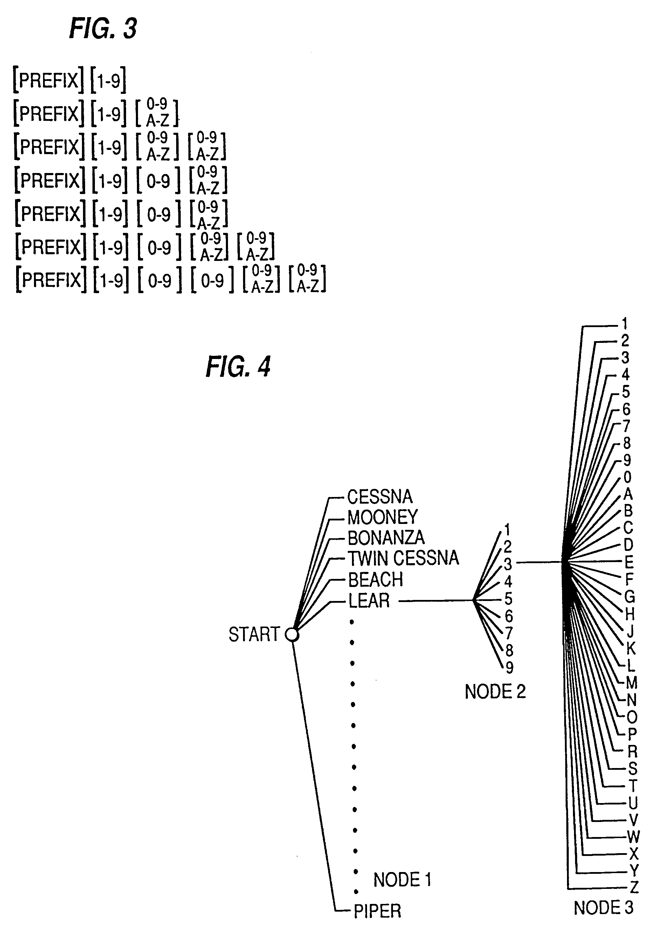

For an understanding of the difficulty of this task, take the example of just one type of aircraft ID, that is for general aviation. Figure 3 shows a way of describing the "syntax" of this type of ID which must consist of a prefix followed by a one to five place suffix. The rules are simple; (1) a zero may not be used in the first suffix place, only the digits 1-9, (2) in places 2-5, the digits 0-9 are eligible as well as most of the alphabet A-Z except that (3) the alphabet may only be used in a last and next to last fields (only one or two letters may be used and an alpha may never precede a digit).

Using these rules, a very large number of identifications can be constructed, just as automobile license plates are formed. The prefix, while not necessary to uniquely describe an aircraft, must be spoken by the controller. The prefix can be the manufacturer name or model name of the aircraft. The current number of prefixes is in the range of a few thousand.

Figure 4 shows the first three nodes of the grammar graph which must be constructed if all possible aircraft ID's are to recognized. An average branching factor of four is desirable, but note that the first branch of this graph has a branching factor in the range of a few thousand, followed by a branching factor of nine. This presents an unachievable challenge for current speech recognition technology.

After analysis of the air traffic control application, it was determined that a priori knowledge can be gleaned from the air traffic control environment. Under normal circumstances, a controller will only talk to an aircraft for which a flight plan exists in the database. These plans are "posted" to a particular controller's computer workstation. The nominal amount of flights under control by one controller is 20. Therefore, out of the perhaps million possible identifications to be recognized, only 20 are actually likely at any given time period. Table 1 following shows eight such aircraft ID's.

**TABLE 1**

| |
|---|
| CESSNA 13AZ |
| CESSNA 175A |
| CESSNA 172 |
| CESSNA 69432 |
| MOONEY 378WL |
| LEAR 9785 |
| LEAR 973 |
| PIPER 302 |

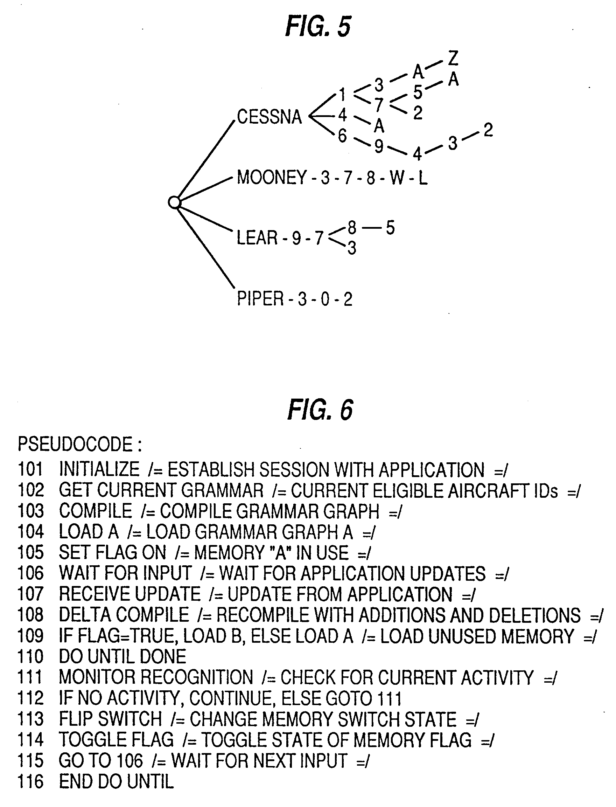

Figure 5 shows the grammar graph for these ID's. The initial branching factors is four, not a few thousand. In fact, the average branching factor for this graph is less than two, well within the limits of current speech recognition technology.

Without the invention however, the advantage could not be taken of the available a priori knowledge. It must be possible to recognize an aircraft ID within one or two seconds of being electronically posted to a air traffic controller's position. This is only possible with a real-time, dynamic constraint speech recognition system.

The invention, as described, makes use of dual memory locations 32 and 35 for the two grammar arrays and a software switch 40 which enables a speech recognition application to be mapped to one or the other memory location. It is also possible to achieve the results of the present invention using only a single memory location. In this case, various techniques may be used to update the single memory location within the time interval between recognition events.

A software listing for the present invention is shown in Fig.6. The pseudocode initializes or establishes a session with the application then gets the grammar which is valid in the application at the time of the request. In the ATC application, this is the current list of active aircraft identifications for that particular position. This grammar is compiled into a grammar graph. This process uses the list of currently valid aircraft identifications, the pre-defined syntax (rules), and the database containing the speech patterns for all possible vocabulary words. This grammar graph is then loaded into memory location "A" since the system is just being initialized and both memories are empty. A flag is then set to indicate that location "A" is in use. At this point in time, recognition - against the grammar graph in "A" may take place. Meanwhile the system is in a wait state, pending input from the application. Upon receipt of an update, a delta compile process is initiated. An update may contain additional aircraft identifications and/or deletions or may also contain a complete new list of identifications. As part of the delta compile, these differences are reconciled and a new grammar graph is generated. During this compile, data will be drawn from the syntax and voice pattern databases if necessary. The next step is to store the new grammar graph. The state of the flag is checked. If the flag is true ("A" is in use) then location "B" will be loaded. The system then enters a loop, awaiting a time during which the active grammar may be changed from "A" to "B" or vice versa. If no recognition activity is detected, the memory switch is toggled. If activity is ongoing, the system continues to loop until the end of the current recognition - then the switch is toggled. Should a subsequent recognition begin immediately, while the switch is being thrown, there is adequate buffering in the switching stageto allow recognition to pend and then catch-up to real-time.

What is described, is an interactive dynamic grammar constraint system for speech recognition for use in many different applications. The particular application for air traffic control has shown a capability of speech recognition with high accuracy in a real-time setting.

## Claims

1. A speech recognition system employing interactive dynamic grammar constraints comprising:
a speech pattern database (27) containing a speech recognition vocabulary;
a controller (17) interfacing with an external speech recognition application running in a real-time environment (10);
a compiler (22) for generating an available grammar graph (32, 35) based on inputs from said external application;
storage means for storing said compiled grammar graph in a memory location;
a recognition processor (47) for analyzing a speech pattern received by said external application by comparison with the contents of said grammar graph and outputting a recognition result to said external application;
wherein said grammar graph is updated by periodic recompilation based on real-time environment conditions of said external application to constrain the available vocabulary.

2. The system of claim 1 wherein a single grammar graph (32 or 35) is used in conjunction with the recognition processor.

3. The system of claim 1 wherein two grammar graphs (32 and 35) are sequentially updated and having a switch (40) to connect one or the other said grammar graph to the recognition processor (47), the contents of each of said grammar graphs being updated only when not connected to said recognition processor.

4. The system of claim 1 wherein the compiler (22) expunges vocabulary no longer available for use by the external application.

5. A method for dynamically constraining the vocabulary in a speech recognition system comprising the steps of:
receiving input information regarding the available active vocabulary from an external application (10);
compiling the input information with a speech pattern database (27) to obtain a grammar graph (32, 35) representing the active vocabulary;
using said grammar graph in a recognition processor (47) to analyze speech;
periodically updating said grammar graph based on the changing input information received from said external application to obtain a interactive dynamic constrained speech vocabulary for providing high accuracy speech recognition.

6. The method of claim 5 further comprising:
sequentially updating one or two grammar graphs (32, 35), the updating occurring only when said grammar graph is not connected to the recognition processor (47); and
switching the connection between one grammar graph (e. g. 32) and the other (e. g. 35) between recognition processing.

7. The method of claim 5 including expunging inactive vocabulary from the grammar graph (32, 35) during compilation.
